Europäisches Patentamt

European Patent Office

Office européen des brevets

(19)

(11) EP 0 624 782 B1

(12) **EUROPÄISCHE PATENTSCHRIFT**

(45) Veröffentlichungstag und Bekanntmachung des Hinweises auf die Patenterteilung:
**23.09.1998 Patentblatt 1998/39**

(51) Int Cl.$^6$: **G01M 3/02**, G01M 3/20

(21) Anmeldenummer: **94104968.6**

(22) Anmeldetag: **29.03.1994**

(54) **Einrichtung zum Abdichten und Überwachen eines Körpers, insbesondere einer Abfalldeponie**

Device for sealing and monitoring a body, in particular a refuse dump

Dispositif pour l'étanchéification et la surveillance d'un corps, en particulier d'une décharge de déchets

(84) Benannte Vertragsstaaten:
**AT BE CH DE DK ES FR GB IT LI NL SE**

(30) Priorität: **30.03.1993 DE 4310317
26.05.1993 DE 4317537**

(43) Veröffentlichungstag der Anmeldung:
**17.11.1994 Patentblatt 1994/46**

(73) Patentinhaber: **SIEMENS
AKTIENGESELLSCHAFT
80333 München (DE)**

(72) Erfinder:
- **Jax, Peter, Dr.
D-91056 Erlangen (DE)**
- **Egloffstein, Thomas, Dr.
D-76227 Karlsruhe (DE)**
- **Burkhardt, Gerd, Dr.
D-71679 Asperg (DE)**

(56) Entgegenhaltungen:
**EP-A- 0 522 481      EP-A- 0 525 594
DE-A- 4 131 085      US-A- 5 246 310**

- **PATENT ABSTRACTS OF JAPAN vol. 16, no. 523 (M-1331) 27. Oktober 1992 & JP-A-04 194 216 (OHBAYASHI) 14. Juli 1992**
- **PATENT ABSTRACTS OF JAPAN vol. 18, no. 65 (M-1554) 3. Februar 1994 & JP-A-05 286 036 (ASAHI CHEM. IND. CO. LTD) 2. November 1993**

**Beschreibung**

Die Erfindung betrifft eine Einrichtung zum Abdichten und Überwachen eines Körpers, insbesondere einer Abfalldeponie, nach dem Oberbegriff des Anspruchs 1.

Eine Einrichtung zum Abdichten und Überwachen ist aus der veröffentlichten internationalen Anmeldung WO 92/16316 bekannt. Dort wird beschrieben, daß zum Abdichten eines Körpers eine Doppelabdichtung verwendet wird. Eine solche Doppelabdichtung besteht aus zwei Abdichtungen, die durch Stützelemente voneinander beabstandet angeordnet sind. Zwischen diesen beiden Abdichtungen befindet sich mindestens ein Kanal, der eine Eintrittsöffnung und eine Austrittsöffnung für ein Medium aufweist, wobei an die Austrittsöffnung mindestens ein Sensor angeschlossen werden kann. Der Kanal, der als Schlauch ausgebildet sein kann, ist an seiner Eintrittsöffnung mit einer Pumpe verbunden, mit der einzelne Volumen des Mediums in zeitlichen Abständen nacheinander durch ihn hindurch befördert werden. Der Kanal wird also in regelmäßigen zeitlichen Abständen mit gleichbleibender Spülfrequenz gespült. Falls in die Umgebung des Kanals ein Schadstoff gelangt, dringt dieser in den für diesen Stoff permeablen Kanal oder Schlauch ein und wird mit dem nächsten Pumpvorgang mit dem Medium zur Austrittsöffnung gebracht.

Dort wird der Schadstoff durch einen Sensor registriert. Da das Medium im Kanal mit einer bekannten Geschwindigkeit strömt, läßt sich aus der Differenz zwischen dem Einschaltzeitpunkt der Pumpe und dem Ansprechzeitpunkt des Sensors genau der Ort bestimmen, an dem zwischen zwei Spülungen des Kanals der Schadstoff in den Kanal gelangt ist. Eine derartige Einrichtung zur Positionsbestimmung eines Lecks wird mit LEOS (Leckerkennungs- und Ortungssystem) bezeichnet und ist aus der DE-PS 24 31 907 bekannt.

Die bekannte Einrichtung zum Abdichten und Überwachen benötigt stets eine Doppelabdichtung, wobei an beide Abdichtungen gleiche Anforderungen hinsichtlich der Undurchlässigkeit gestellt sind. Beide Abdichtungen bestehen beispielsweise aus Kunststofffolien. Bisher gingen Fachleute stets davon aus, daß die Kanäle des Leckerkennungs- und Ortungssystems (LEOS) innerhalb einer solchen Doppeldichtung eingesetzt werden müßten, damit ein Leck zuverlässig erkannt werden kann. Man ging davon aus, daß ein Schadstoff, der durch ein Leck in einer der Abdichtungen dringt, einen möglichst leeren Zwischenraum innerhalb einer Doppeldichtung benötigt, in dem er sich ausbreiten kann, bis er den nächstgelegenen Kanal oder Sensorschlauch erreicht, der sich meistens nicht direkt unterhalb des Lecks befindet. Man glaubte, daß ohne einen solchen möglichst leeren Zwischenraum der Schadstoff am Kanal vorbeiströmen würde.

Zum Aufbau einer Doppelabdichtung sind beim Bekannten Stützelemente notwendig, die die beiden Abdichtungen beabstanden.

Die bekannte Einrichtung zum Abdichten und Überwachen erfordert einen hohen Material- und Verlegeaufwand. Außerdem muß die Doppelabdichtung für die Reparatur eines Lecks zugänglich sein.

Eine Einrichtung zum Abdichten und Überwachen einer Abfalldeponie ist auch aus dem Aufsatz "Die Rollins-Hochdeponie mit neuen Kontrollsystemen" in BMT, April 1987, Seiten 196 - 200, bekannt.

Das Dokument EP-A-0 525 594 offenbart eine Einrichtung zum Abdichten und Überwachen einer Abfalldeponie, wobei im unteren Bereich der Deponie die Sensorkanäle in einer mineralischen Abdichtung eingebettet sind.

Der Erfindung liegt die Aufgabe zugrunde, eine Einrichtung zum Abdichten und Überwachen eines Körpers, insbesondere einer Abfalldeponie, anzugeben, die bei hoher Zuverlässigkeit einfach und kostengünstig herzustellen und zu verlegen ist.

Die Aufgabe wird gemäß der Erfindung durch die Merkmale des kennzeichnenden Teils des Anspruchs 1 gelöst.

Mit der Einrichtung nach der Erfindung wird der Vorteil erzielt, daß nur eine einzige flüssigkeitsdichte Abdichtung, die beispielsweise eine Kunststofffolie ist, verlegt zu werden braucht. Die zweite Abdichtung kann vorteilhafterweise aus einzelnen Matten oder sogar aus einem Schüttgut mit hinreichender Schichtdicke bestehen. Die zweite Abdichtung ist nicht folienartig aufgebaut. Dadurch, daß das mineralische Material der zweiten Abdichtung ein in der genannten Weise aniosotropes Permeationsverhalten zeigt, bewegen sich Schadstoffe, die durch ein Leck in der sonst flüssigkeitsdichten Abdichtung das mineralische Material erreichen, mit einer parallel zur Abdichtung gerichteten Komponente. Die Schadstoffe können dadurch auch einen Kanal des Leckerkennungs- und Ortungssystems erreichen, der nicht unterhalb des Lecks angeordnet ist.

Bedingt durch die Anisotropie des verwendeten mineralischen Materials ist dieses vorteilhafterweise für die zweite Abdichtung einsetzbar. Die Schadstoffe strömen dann nach einem Leck in der ersten Abdichtung im mineralischen Material der zweiten Abdichtung mit einer relativ großen Richtungskomponente parallel zur ersten Abdichtung.

Die Geschwindigkeit parallel zur ersten Abdichtung kann dabei beispielsweise $10^{-9} \frac{m}{sec}$ betragen.

Ein anderer Vorteil der mineralischen Dichtung ist darin zu sehen, daß diese von einem Schadstoff kaum durchdrungen werden kann.

Die Einrichtung nach der Erfindung kommt ohne Stützelemente aus. Zusätzlich kann eine durchlässige Zwischenschicht zwischen den beiden Abdichtungen, z. B. Sand oder eine dünne Fasermatte aus Kunststoffvlies, vorhanden sein.

Insbesondere die zweite Abdichtung aus dichtendem Material kann schnell und einfach verlegt werden.

Die Einrichtung nach der Erfindung ist vorzugsweise weitgehend horizontal angeordnet. Sie kann dann oberhalb und unterhalb eines Körpers, der insbesondere eine Abfalldeponie ist, eingesetzt werden.

Vorzugsweise ist im unteren Bereich des Körpers die erste Abdichtung dem Körper zugewandt angeordnet. Der mindestens eine Kanal befindet sich dann auf der vom Körper abgewandten Seite der ersten Abdichtung. Die zweite Abdichtung ist auf der vom Körper abgewandten Seite der ersten Abdichtung und des mindestens einen Kanals angeordnet.

Eine solche Einrichtung ist besonders für eine Basisabdichtung einer Abfalldeponie geeignet. Sie ist dazu unterhalb eines Abfallkörpers angeordnet.

Falls ein Leck in der ersten Abdichtung auftreten sollte, gelangt ausgetretener Schadstoff in die Grenzschicht zwischen den beiden Abdichtungen und gelangt dort durch diffusen, aber vor allem kapillaren Transport zu einem Kanal. Der Schadstoff wird durch die zweite mineralische Abdichtung weitgehend zurückgehalten, so daß bis zur Reparatur eines erkannten Lecks fast kein Schadstoff durch die zweite Abdichtung hindurch gelangt. Eine Flüssigkeit, die durch ein Leck in der ersten Abdichtung in die zweite Abdichtung eingedrungen ist, bleibt dort weitgehend gefangen.

Nach einer anderen Ausführungsform ist im oberen Bereich des Körpers der mindestens eine Kanal auf der dem Körper zugewandten Seite der ersten Abdichtung angeordnet. Die zweite Abdichtung ist dabei auf der dem Körper zugewandten Seite der ersten Abdichtung und des mindestens einen Kanals angeordnet.

Eine solche Einrichtung ist besonders als obere Abdichtung eines Abfallkörpers geeignet.

Während flüssige Schadstoffe aus einer Abfalldeponie nach unten absinken, steigen Deponiegase und Dämpfe nach oben. Dort treffen sie bei der genannten Ausführungsform der Einrichtung zum Abdichten zuerst auf die zweite Abdichtung, die aus mineralischem dichtendem Material besteht. Diese Abdichtung ist so dick ausgeführt, daß sie üblicherweise dicht ist und keine Gase und Dämpfe durchläßt. Das gilt für mineralisches Material insbesondere dann, wenn es feucht ist. Bei Verwendung der zweiten Abdichtung als Deckschicht einer Abfalldeponie ist stets gewährleistet, daß das mineralische Material feucht ist. Mindestens ein Kanal zur Detektion von Gasen und Dämpfen ist bei dieser Ausführungsform oberhalb oder im oberen Bereich der zweiten Abdichtung angeordnet. Die zweite Abdichtung und den mindestens einen Kanal nach oben überdeckend ist die erste, flüssigkeitsdichte Abdichtung angeordnet.

Mittels der Kanäle wird bei der genannten Ausführungsform untersucht, ob die zweite Abdichtung, nämlich die mineralische Abdichtung, gasdicht und dampfdicht ist. Die erste Abdichtung hält im genannten Fall Gase und Dämpfe zurück, bis nach einem Leck in der zweiten Abdichtung eine Reparatur erfolgt sein kann.

Die beiden geschilderten Ausführungsformen der Einrichtung nach der Erfindung unterscheiden sich dadurch, daß bei einer Basisabdichtung die erste, flüssigkeitsdichte Abdichtung dem Abfallkörper zugewandt ist und bei der oberen Abdichtung die zweite, mineralische Abdichtung dem Abfallkörper zugewandt ist. In beiden Fällen wird die jeweils dem Körper zugewandte Dichtung durch mindestens einen Kanal auf Dichtheit überprüft. Während bei der Basisabdichtung die zweite mineralische Abdichtung eine zusätzliche sichere Abdichtung gewährleistet, kommt die gleiche Funktion bei der oberen Abdichtung der ersten flüssigkeitsdichten Abdichtung zu.

Nach einer anderen Ausführungsform ist die Einrichtung seitlich vom Körper weitgehend senkrecht angeordnet. Damit wird der Vorteil erzielt, daß auch ein weitgehend quaderförmiger Körper von allen Seiten eingeschlossen werden kann. Seitlich vom Körper kann die Abfolge der Abdichtungen wahlweise erfolgen.

Die erste Abdichtung besteht vorzugsweise aus einzelnen miteinander verbundenen Segmenten. Diese Segmente können starre Kunststoffplatten sein, die einzeln installiert und dann dicht miteinander verbunden werden können. Zum Verbinden können übliche Verfahren eingesetzt werden. Beispielsweise können die Segmente verschweißt werden. Es können aber auch als Schlösser bezeichnete Verbindungsteile eingesetzt werden. Die aus den Segmenten aufgebaute erste Abdichtung umschließt den abzudichtenden Körper wie eine Wand.

Der Kanal, der zum Überwachen der Abdichtung notwendig ist, ist vorzugsweise mit Halteschlaufen an der ersten Abdichtung befestigt. Insbesondere bei einer senkrechten Anordnung der Abdichteinrichtung ist dadurch gewährleistet, daß während des Aufbaus der Einrichtung der Kanal an der gewünschten Position an der ersten Abdichtung bleibt.

Die zweite Abdichtung kann dreilagig sein, wobei die mittlere Lage aus einem absorbierenden Material und die beiden anderen Lagen aus einem inerten mineralischen Material bestehen. Das absorbierende Material kann ein chemisch reaktives Tonmineral sein oder auch ein speziell abgestimmter Sorbent, die in der Lage sind, in sie kapillar hineindringende Schadstoffe zu binden. Durch den dreilagigen Aufbau wird verhindert, daß durch ein Leck in der ersten Abdichtung hindurchdringender Schadstoff unkontrolliert abfließt. Dieser Schadstoff wird in der mittleren Lage der zweiten Abdichtung absorbiert. Der Kanal der Überwachungsvorrichtung ist in der der ersten Abdichtung, die eine Kunststoffdichtungsbahn sein kann, zugewandten Lage aus mineralischem Material angeordnet.

In einer weiteren Variante weist die zweite Abdichtung quellfähiges Material auf. Damit wird insbesondere der Vorteil erzielt, daß ein durch ein Leck in der ersten Abdichtung oder unmittelbar eingedrungener flüssiger oder feuchter Schadstoff im dichtenden Material der zweiten Abdichtung einen Quellprozeß auslöst. Der Schadstoff gelangt in der Grenzschicht zwischen den beiden Abdichtungen zum Kanal und gleichzeitig wird das Leck in der ersten Abdichtung durch das gequollene Material der zweiten Abdichtung verschlossen. Es ist also kein Reparaturschritt notwendig, um ein festgestelltes Leck wieder zu verschließen. Die Einrichtung ist daher vorteilhafterweise unterhalb einer Abfalldeponie oder an anderen schwer zugänglichen Orten einsetzbar.

Vorzugsweise besteht das quellfähige Material aus mindestens einer quellfähigen Fasermatte. Es können eine einstückige Fasermatte oder mehrere Fasermatten, die zusammengefügt werden können, vorhanden sein. In beiden Fällen ist das Material leicht zu verlegen.

Der mindestens eine Kanal kann vorzugsweise an einer solchen Fasermatte fixiert angeordnet sein. Eine solche Fasermatte mit der ersten Abdichtung zugewandtem fixierten Kanal ist schnell und einfach zu verlegen. Durch Verlegen der Fasermatte ist dann auch gleich der Kanal verlegt. Das vereinfacht den Aufbau der Abdichtung deutlich.

Vorzugsweise ist die zweite Abdichtung, die insbesondere eine Fasermatte sein kann, zum Kanal hin geneigt angeordnet. Damit wird der Vorteil erzielt, daß ein in das Material eingedrungener Schadstoff im Material zum Kanal hin fließen kann.

Die zweite Abdichtung kann aus Bentonit bestehen, oder Bentonit, z.B. in der Form einer Schicht enthalten. Bentonit ist vorteilhafterweise kostengünstig.

Zwischen den beiden Abdichtungen kann eine dem mindestens einen Kanal zugeordnete durchlässige Zwischenschicht, z.B. aus Sand, angeordnet sein, durch die hindurch eingedrungene Schadstoffe leicht zu einem Kanal gelangen.

Die Kanäle können vorzugsweise in unterschiedlichen Abständen von der ersten Abdichtung angeordnet sein. Damit wird der Vorteil erzielt, daß bei getrennter Überwachung der Kanäle das Vordringen eines Schadstoffes in das dichtende Material erfaßt und sogar die vom Körper weg gerichtete Vordringgeschwindigkeit bestimmt werden können.

Vorzugsweise ist zum Erkennen eines Lecks in der ersten Abdichtung eine Lanze vorhanden, mit der ein Tracer in die Nähe der ersten Abdichtung gebracht werden kann. Eine solche Lanze kann insbesondere dann eingesetzt werden, wenn es sich um eine oberhalb eines Körpers angeordnete Ausführungsform der Einrichtung nach der Erfindung handelt. Durch den mindestens einen Kanal wird dann nämlich nur die Dichtheit der zweiten mineralischen Dichtung überprüft, weil am mindestens einen Kanal in der Regel nur Gase detektiert werden können. Bei einem Leck in der ersten, bei dieser Anordnung oberen Abdichtung würde jedoch von außen nur Wasser oder wäßrige Lösungen zum Kanal vordringen. Diese Flüssigkeiten werden nicht vom angeschlossenen Sensor erkannt, so daß ein Leck nicht zu erkennen wäre. Die Überprüfung der ersten, flüssigkeitsdichten Abdichtung erfolgt daher derart, daß über die Lanze ein im Sensor zu erkennendes Gas in die Nähe der ersten Abdichtung gebracht wird. Dieses Gas kann eine nicht verletzte erste Abdichtung nicht durchdringen. Nur wenn ein Leck vorliegen sollte, gelangt das durch die Lanze herangeführte Gas durch das Leck hindurch zum Kanal und wird detektiert. Mit dem Einsatz der Lanze wird der Vorteil erzielt, daß die Einrichtung zum Abdichten nach der Erfindung nicht nur auf austretende Stoffe, sondern auch auf von außen eindringende Stoffe überwacht werden kann.

Mit der Einrichtung nach der Erfindung wird der Vorteil erzielt, daß ein Körper, insbesondere eine Abfalldeponie, mit einfachen Mitteln abgedichtet und überwacht werden kann.

Die Erfindung wird anhand der Zeichnung näher erläutert:

Figur 1    zeigt eine Einrichtung zum Abdichten und Überwachen eines Körpers, wobei eine durchlässige Zwischenschicht vorgesehen ist.

Figur 2    zeigt eine Variante der Einrichtung nach Figur 1, die keine durchgehende Zwischenschicht aufweist.

Figur 3    zeigt eine Einrichtung zum Abdichten und Überwachen eines Körpers, wobei die zweite Abdichtung quellfähiges Material enthält.

Figur 4    zeigt eine Einrichtung zum Abdichten und überwachen eines Körpers, wobei die zweite Abdichtung quellfähige Fasermatten umfaßt.

Figur 5    zeigt eine Einrichtung zum Abdichten und Überwachen eines Körpers mit einer dreilagigen zweiten Abdichtung.

Figur 6    zeigt eine Einrichtung zum Abdichten und Überwachen eines Körpers, die weitgehend senkrecht angeordnet ist.

Figur 7    zeigt eine Einrichtung zum Abdichten und Überwachen eines Körpers mit mehreren Kanälen in unterschiedlichen Abständen von der ersten Abdichtung.

Figur 8    zeigt eine erste Variante eines möglichen Verlaufs eines Kanals in einer Einrichtung zum Abdichten und Überwachen eines Körpers.

Figur 9    zeigt eine zweite Variante eines Verlaufs eines Kanals in einer Einrichtung zum Abdichten und Überwachen eines Körpers.

Figur 10   zeigt Einrichtungen zum Abdichten und Überwachen unterhalb und oberhalb eines Körpers.

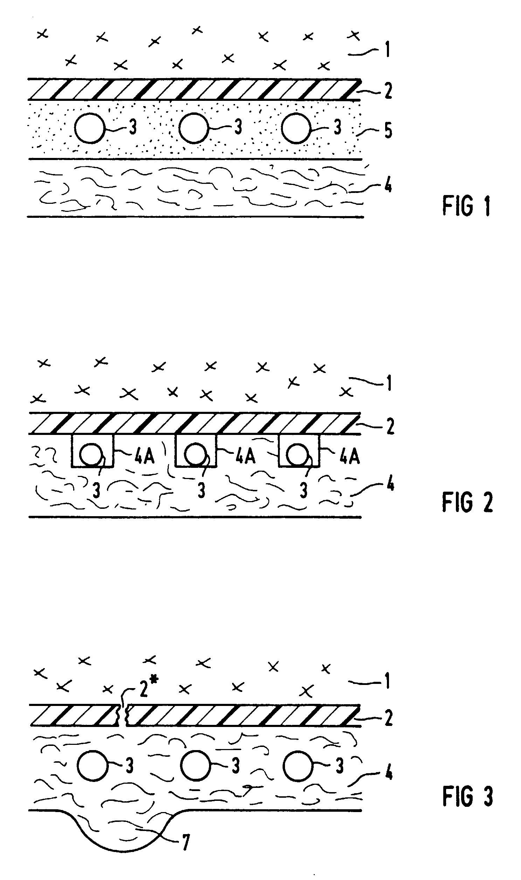

Nach Figur 1 ist unterhalb einer Abfalldeponie 1 eine Einrichtung zum Abdichten und Überwachen angeordnet. Die Einrichtung kann auch oberhalb der Abfalldeponie 1 oder seitlich von der Abfalldeponie 1 angeordnet sein. Diese besteht aus einer ersten Abdichtung 2, die eine weitgehend gas- und flüssigkeitsdichte Kunststoffolie sein kann, die z.B. 2,5 mm dick ist. Auf der von der Abfalldeponie 1 abgewandten Seite der ersten Abdichtung 2 sind Kanäle 3 angeordnet, die Teil eines als solchen bekannten Leckerkennungs- und Ortungssystems (LEOS) sind. Die erste Abdichtung 2 und die Kanäle 3 überdeckend ist auf der von der Abfalldeponie 1 abgewandten Seite der ersten Abdichtung 2 eine zweite Abdichtung 4 angeordnet, die als mineralische Schicht ausgebildet ist. Diese mineralische Schicht kann z.B. mindestens 50 cm dick sein. Das mineralische Material kann Kaolinit sein. Zwischen den Abdichtungen 2 und 4 ist eine Zwischenschicht 5 aus Sand angeordnet, die die Kanäle 3 umgibt.

Die Variante nach Figur 2 unterscheidet sich von der Ausführungsform nach Figur 1 dadurch, daß keine Zwischenschicht 5 vorhanden ist. In die zweite Abdichtung 4, die als mineralische Schicht ausgebildet ist, sind nach Figur 2 Gräben 4A eingefräst oder auf andere Weise eingebracht. In jedem dieser Gräben 4A verläuft ein Kanal 3. Die Gräben 4A sind durch die erste Abdichtung 2 überdeckt und können mit Sand oder einem ähnlichen Material gefüllt sein.

Figur 3 zeigt eine erste Abdichtung 2, die mit einer zweiten Abdichtung 4 überdeckt ist, die aus quellfähigem Material besteht oder zumindest eine Schicht aus quellfähigem Material aufweist. Kanäle 3 sind in die zweite Abdichtung 4 eingebettet. Falls ein Leck 2* in der ersten Abdichtung 2 entstehen sollte, könnten aus der Abfalldeponie 1 Schadstoffe in Verbindung mit einer Flüssigkeit in die zweite Abdichtung 4 eindringen. Das quellfähige Material der zweiten Abdichtung 4 würde dann eine Volumenvergrößerung erfahren. Dieses zusätzliche Volumen 7 ermöglicht ein verbessertes Abdichten der Leckstelle. Gleichzeitig gelangt der Schadstoff in einen der Kanäle 3 und wird in bekannter Weise detektiert, wobei auch der Leckageort bestimmt werden kann.

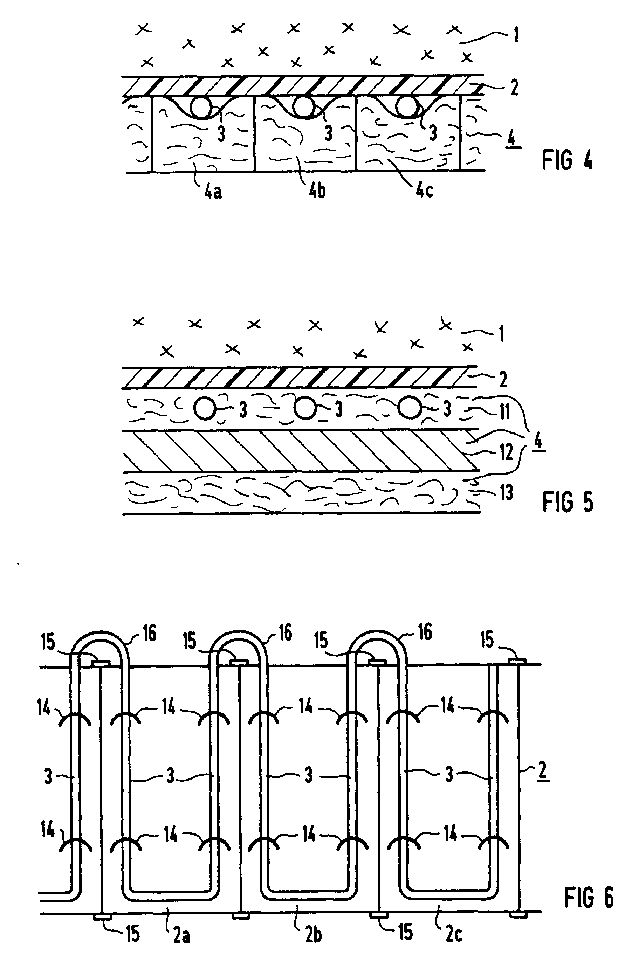

Als Variante zeigt Figur 4 eine erste Abdichtung 2, Kanäle 3 und eine zweite Abdichtung 4, die aus quellfähigen Fasermatten 4a bis 4c aufgebaut ist. An jeder Fasermatte 4a bis 4c ist ein Kanal 3 derart fixiert, daß er der ersten Abdichtung 2 zugewandt ist.

Figur 5 zeigt eine erste Abdichtung 2, der eine dreilagige zweite Abdichtung 4 zugeordnet ist. Die zweite Abdichtung 4 besteht aus drei Lagen 11, 12, 13. Die mittlere Lage 12 besteht aus einem absorbierenden Material und die beiden anderen Lagen 11 und 13 bestehen aus einem inerten mineralischen Material. Die Kanäle 3 sind in der der ersten Abdichtung 2 zugewandten Lage 11 angeordnet. Die dreilagige zweite Abdichtung 4 ist beispielsweise mindestens 75 cm dick. Die erste Lage 11, die der ersten Abdichtung 2 zugewandt ist, besteht aus mineralischem Material, dessen Feinstkornanteil aus chemisch stabilen Tonmineralien wie Kaolinit bestehen kann. Der durchflußwirksame Porenraum kann mit einem chemisch inerten Hydrosilikatgel weitgehend versiegelt sein. Die erste Lage 11 hat möglichst kein Adsorptionsvermögen. Hingegen ist die mittlere Lage 12 als Sorptionsschicht ausgebildet. Sie kann aus chemisch reaktiven Tonmineralien, wie Montmorillonit, einem Hauptbestandteil von Bentonit, bestehen. Die dritte Lage 13 ist wie die erste Lage 11 aufgebaut. Jedoch ist in der dritten Lage 13 kein Verschließen des Porenraumes mit Hydrosilikatgel notwendig. Falls ein Schadstoff durch ein Leck in der ersten Abdichtung 2 hindurchdringt, gelangt er innerhalb der ersten Lage 11 zum nächsten Kanal 3. Wegen der geringen Durchlässigkeit des Materials der ersten Lage 11 wird eine zu große Ausbreitung des Schadstoffes verhindert. Die mittlere Lage 12 dient dazu Schadstoffe, die trotzdem die erste Lage 11 durchdringen, aufzuhalten. Die dritte Lage 13 verhindert, daß Schadstoffe die mittlere Lage 12 verlassen.

Figur 6 zeigt eine Ausführungsform, bei der eine Einrichtung zum Abdichten und Überwachen seitlich von dem zu überwachenden Körper angeordnet ist. Dabei besteht die erste Abdichtung 2, damit sie weitgehend senkrecht aufgebaut werden kann, aus einzelnen Segmenten 2a bis 2c. Diese Segmente 2a bis 2c sind miteinander verbunden. Dazu können mechanische Verbindungen, sogenannte Schlösser 15, dienen. Die Segmente 2a bis 2c können aber auch durch andere Mittel verbunden werden. Sie können beispielsweise miteinander verschweißt werden. Die Kanäle 3 sind durch Halteschlaufen 14 auf der dem zu überwachenden Körper abgewandten Seite der Segmente 2a bis 2c befestigt. Dadurch können die Segmente 2a bis 2c zusammen mit den Kanälen 3 schnell aufgebaut werden. Um die Kanäle 3 eines Segmentes 2a bis 2c mit den Kanälen 3 des benachbarten Segmentes 2a bis 2c zu verbinden, sind Verbindungsstücke 16 vorgesehen, die nach Aufbau der Segmente 2a bis 2c angebracht werden.

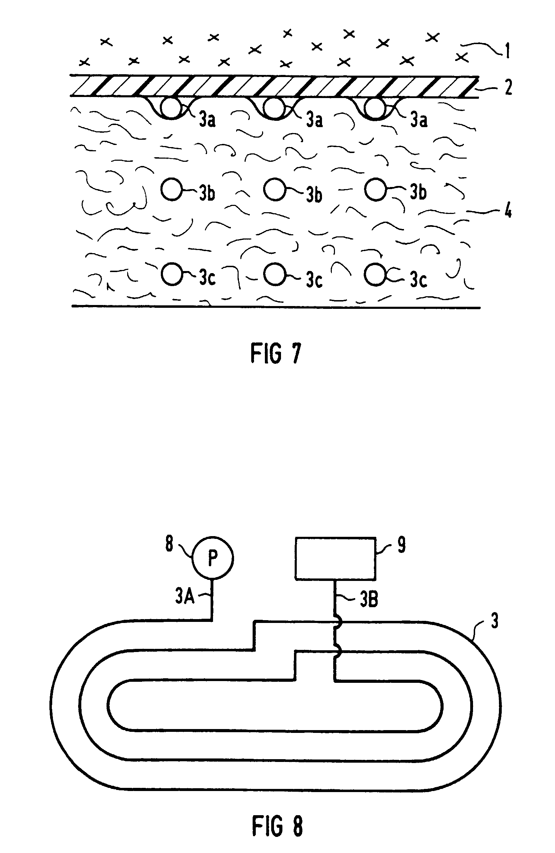

Figur 7 zeigt eine erste Abdichtung 2, eine zweite Abdichtung 4 in der Form einer mineralischen Schicht und daran fixierte Kanäle 3a. Die zweite Abdichtung 4 kann aus quellfähigem Material oder aus Fasermatten bestehen. Zusätzliche Kanäle 3b und 3c sind in unterschiedlicher Entfernung zur ersten Abdichtung 2 in der zweiten Abdichtung 4 angeordnet. Die Zeiträume zwischen dem Eintreffen eines Schadstoffes an einem nahen Kanal 3a und einem weiter entfernten Kanal 3b, bzw. 3c geben Auskunft über die Eindringgeschwindigkeit des Schadstoffs in die zweite Abdichtung 4. Durch die zusätzlichen Kanäle 3b und 3c wird überprüft, ob die zweite Abdichtung 4 noch dicht ist.

Die Kanäle 3a können auch in einer zusätzlichen Zwischenschicht, wie in Figur 1 gezeigt, angeordnet sein.

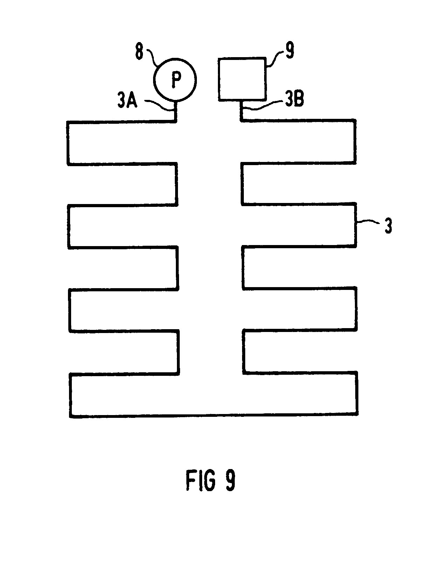

Die Figuren 8 und 9 zeigen Ausführungsformen für die Verlegung eines Kanals 3 unterhalb oder oberhalb einer Abfalldeponie 1. Der Eintrittsöffnung 3A des Kanals 3 ist eine Pumpe 8 zugeordnet, durch die in bekannter Weise in zeitlichen Abständen Luftvolumina durch den Kanal 3 hindurch befördert werden. Der Austrittsöffnung 3B des Kanals 3 ist ein Sensor 9 zugeordnet, der in den Kanal 3 eingedrungene Schadstoffe registrieren kann. Es können auch mehrere Sensoren 9 für verschiedene Schadstoffe vorhanden sein.

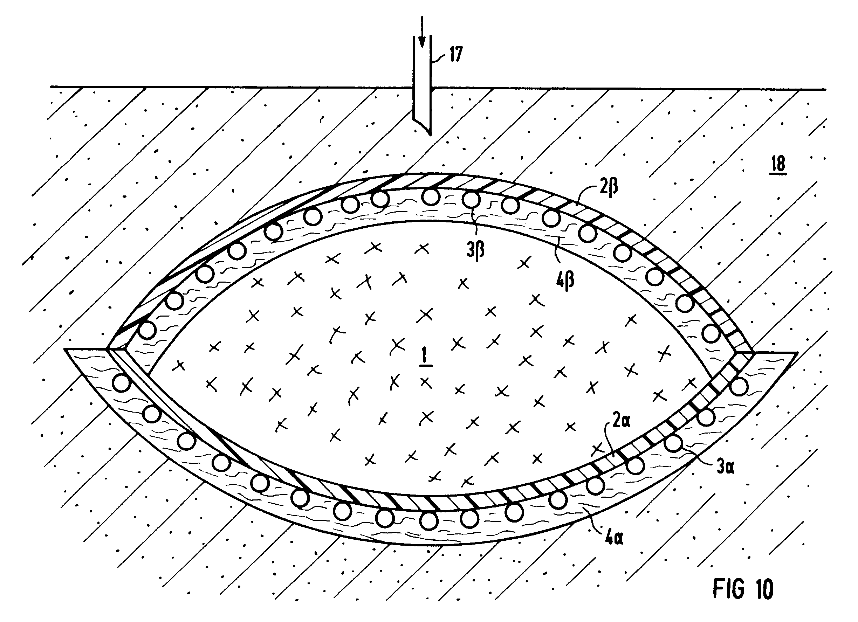

Figur 10 zeigt eine Abfalldeponie 1 mit einer unteren Basisabdichtung und mit einer oberen Abdichtung. Bei der unteren Abdichtung ist die erste Abdichtung $2\alpha$, die eine weitgehend gas- und flüssigkeitsdichte Kunststoffolie sein kann, der Abfalldeponie 1 zugewandt angeordnet. Wie in den Figuren 1 bis 5 und 7 dargestellt, sind Kanäle $3\alpha$ auf der von der Abfalldeponie 1 abgewandten Seite der ersten Abdichtung $2\alpha$ angeordnet. Die Kanäle $3\alpha$ und die erste Abdichtung $2\alpha$-überdeckend ist eine zweite Abdichtung $4\alpha$ aus mineralisch dichtendem Material angeordnet. Die Kanäle $3\alpha$ sind Teil eines als solchen bekannten Leckerkennungs- und Ortungssystems. Bei einem Leck in der ersten Abdichtung $2\alpha$ gelangen Schadstoffe aus der Abfalldeponie 1 in die Kanäle $3\alpha$ und werden registriert. Die zweite Abdichtung $4\alpha$ hält durch ein Leck in der ersten Abdichtung $2\alpha$ kommende Schadstoffe zurück.

Bei der oberen Abdichtung der Abfalldeponie 1 ist eine mineralische zweite Abdichtung $4\beta$ der Abfalldeponie 1 zugewandt. Diese mineralische zweite Abdichtung $4\beta$ hält aufsteigende Gase zurück. Das gilt insbesondere dann, wenn die zweite Abdichtung $4\beta$ feucht ist, was jedoch bei unmittelbarem Angrenzen an die Abfalldeponie 1 gegeben ist. Sollte ein Leck in der zweiten Abdichtung $4\beta$ dazu führen, daß Gase oder Dämpfe aus der Abfalldeponie 1 in die zweite Abdichtung $4\beta$ eindringen, dann werden diese Dämpfe in Kanälen $3\beta$ aufgefangen, die sich im oberen Teil oder auch oberhalb der zweiten Abdichtung $4\beta$ befinden. Diese Kanäle $3\beta$ sind Teil eines als solchen bekannten Leckerkennungs- und Ortungssystem, wo die Gase und Dämpfe registriert werden können. Bei der oberen Abdichtung der Abfalldeponie 1 dient die oberste erste beispielsweise aus einer Kunststoffolie bestehende Abdichtung $2\beta$ als zusätzliche Abdichtung.

Um ein Leck in dieser oberen ersten Abdichtung $2\beta$ erkennen zu können, kann ein Tracergas von oben durch eine Lanze 17 in die Nähe der ersten Abdichtung $2\beta$ gebracht werden. Dazu wird die Lanze 17 in Material 18, das die Abfalldeponie überdeckt, eingeführt. Das Material 18 kann Sand oder Erde sein. Das Tracergas gelangt dann durch ein mögliches Leck in der ersten Abdichtung $2\beta$ hindurch zu den Kanälen $3\beta$. Das Tracergas wird so gewählt, daß es durch Sensoren des mit den Kanälen $3\beta$ verbundenen Leckerkennungs- und Ortungssystems erkannt werden kann. Ohne die Verwendung eines Tracergases würde nämlich nur Wasser durch ein Leck in der ersten Abdichtung $2\beta$ eindringen, das dann nicht erkannt werden kann.

Wenn durch ein Leck in einer Abdichtung 2, 4 ein Schadstoff oder Tracergas hindurchgelangt, bewegt sich dieser zum nächsten Kanal 3 und dringt in den permeablen Kanal 3 ein. Mit dem nächsten durch die Pumpe 8 eingespeisten Luftvolumen wird der Schadstoff zum Sensor 9 bewegt und dort registriert. Aus dem Zeitunterschied zwischen dem Einspeisen des Luftvolumens und dem Registrieren des Schadstoffs am Sensor 9 läßt sich der Leckageort bestimmen.

Die Einrichtung zum Abdichten und Überwachen eines Körpers nach der Erfindung kann mit einfachen Mitteln aufgebaut werden. Darüber hinaus kann ohne äußere Eingriffe ein Leck in einer Abdichtung 2, 4 dadurch beseitigt werden, daß in der zweiten Abdichtung 4 eine Fasermatte oder eine Schicht aus quellfähigem Material am Ort eines Lecks aufquillt und das Leck verschließt.

**Patentansprüche**

1. Einrichtung zum doppelseitigen Abdichten und Überwachen eines Körpers, insbesondere einer Abfalldeponie (1), mit einer ersten flüssigkeitsdichten Abdichtung (2) und einer zweiten Abdichtung (4) aus mineralischem, dichtendem Material und mit einer Überwachungsvorrichtung mit mindestens einem für einen zu detektierenden Stoff permeablen Kanal (3), der eine Eintrittsöffnung (3A) und eine Austrittsöffnung (3B) für ein Transportmedium aufweist und an der Austrittsöffnung (3B) mit einem Sensor (9) für den zu detektierenden Stoff verbunden ist,
   **dadurch gekennzeichnet**, daß die doppelseitige Abdichtung sowohl im unteren Bereich als auch im oberen Bereich des Körpers so ausgebildet ist, daß der mindestens eine Kanal (3) in der zweiten Abdichtung (4) eingebettet oder zwischen der ersten (2) und der zweiten Abdichtung (4) angeordnet ist, und daß die zweite Abdichtung (4) senkrecht zur Dichtfläche eine geringere Durchlässigkeit als in der Ebene der Dichtfläche hat, um den zu detektierenden Stoff zum Kanal (3) zu führen.

2. Einrichtung nach Anspruch 1,
   **dadurch gekennzeichnet**, daß sie weitgehend horizontal angeordnet ist.

3. Einrichtung nach einem der Ansprüche 1 oder 2,
   **dadurch gekennzeichnet**, daß im unteren Bereich des Körpers die erste Abdichtung ($2\alpha$) dem Körper zugewandt angeordnet ist, daß der mindestens eine Kanal ($3\alpha$) auf der vom Körper abgewandten Seite der ersten Abdichtung ($2\alpha$) angeordnet ist und daß die zweite Abdichtung ($4\alpha$) auf der vom Körper abgewandten Seite der ersten Abdichtung ($2\alpha$) und des mindestens einen Kanals ($3\alpha$) angeordnet ist.

4. Einrichtung nach einem der Ansprüche 1 oder 2,

**dadurch gekennzeichnet**, daß im oberen Bereich des Körpers der mindestens eine Kanal (3β) auf der dem Körper zugewandten Seite der ersten Abdichtung (2β) angeordnet ist und daß die zweite Abdichtung (4β) auf der dem Körper zugewandten Seite der ersten Abdichtung (2β) und des mindestens einen Kanals (3β) angeordnet ist.

5. Einrichtung nach einem der Ansprüche 1 oder 3 oder 4
**dadurch gekennzeichnet,** daß sie seitlich vom Körper weitgehend senkrecht angeordnet ist.

6. Einrichtung nach einem der Ansprüche 1 bis 5,
**dadurch gekennzeichnet,** daß die erste Abdichtung (2) aus einzelnen miteinander verbundenen Segmenten (2a - c) besteht.

7. Einrichtung nach einem der Ansprüche 5 oder 6,
**dadurch gekennzeichnet,** daß der Kanal (3) mit Halteschlaufen (14) an der ersten Abdichtung (2) befestigt ist.

8. Einrichtung nach einem der Ansprüche 1 bis 7,
**dadurch gekennzeichnet,** daß die zweite Abdichtung (4) dreilagig ist und daß die mittlere Lage (12) aus einem absorbierenden Material und die beiden anderen Lagen (11, 13) aus einem inerten mineralischen Material bestehen.

9. Einrichtung nach einem der Ansprüche 1 bis 8,
**dadurch gekennzeichnet,** daß die zweite Abdichtung (4) quellfähiges Material aufweist.

10. Einrichtung nach einem der Ansprüche 1 bis 9,
**dadurch gekennzeichnet,** daß als zweite Abdichtung (4) mindestens eine quellfähige Fasermatte (4a - 4c) angeordnet ist.

11. Einrichtung nach Anspruch 10,
**dadurch gekennzeichnet,** daß mindestens ein Kanal (3) der ersten Abdichtung (2) zugewandt an jeweils einer Fasermatte (4a - 4c) fixiert ist.

12. Einrichtung nach einem der Ansprüche 1 bis 11,
**dadurch gekennzeichnet,** daß die zweite Abdichtung (4) zu einem benachbarten Kanal (3) hin geneigt angeordnet ist.

13. Einrichtung nach einem der Ansprüche 1 bis 12,
**dadurch gekennzeichnet,** daß die zweite Abdichtung (4) aus Bentonit besteht oder Bentonit enthält.

14. Einrichtung nach einem der Ansprüche 1 bis 13,
**dadurch gekennzeichnet,** daß zwischen den beiden Abdichtungen (2 und 4) eine dem mindestens einen Kanal (3) zugeordnete durchlässige Zwischenschicht (5) angeordnet ist.

15. Einrichtung nach Anspruch 14,
**dadurch gekennzeichnet,** daß die durchlässige Zwischenschicht (5) aus Sand besteht.

16. Einrichtung nach einem der Ansprüche 1 bis 15,
**dadurch gekennzeichnet,** daß Kanäle (3a - c) in unterschiedlichem Abstand von der ersten Abdichtung (2) angeordnet sind.

17. Einrichtung nach einem der Ansprüche 1 bis 16,
**dadurch gekennzeichnet,** daß zum Erkennen eines Lecks in der ersten Abdichtung (2) eine Lanze (17) vorhanden ist, mit der ein Tracer in die Nähe der ersten Abdichtung (2) zu bringen ist.

**Claims**

1. Arrangement for the double-sided sealing and monitoring of a body, in particular a refuse dump (1), having a first liquid-tight seal (2) and a second seal (4) of a mineral, sealing material, and having a monitoring arrangement having at least one channel (3) which is permeable for a substance to be detected and has an inlet opening (3A) and an outlet opening (3B) for a transport medium and the outlet opening (3B) of which is connected to a sensor (9) for the substance to be detected, characterised in that both in the lower region and in the upper region of the body, the double-sided seal is constructed in such a way that the at least one channel (3) is embedded in the second seal (4) or arranged between the first seal (2) and the second seal (4), and in that the second seal (4) has a lower permeability at right angles to the sealing surface than in the plane of the sealing surface, in order to guide the substance to be detected to the channel (3).

2. Arrangement according to claim 1,
characterised in that it is arranged substantially horizontally.

3. Arrangement according to one of the claims 1 or 2, characterised in that in the lower region of the body, the first seal (2α) is arranged facing the body, in that the at least one channel (3α) is arranged on the side of the first seal (2α) that faces away from the body, and in that the second seal (4α) is arranged on the side of the first seal (2α) and of the at least one channel (3α) that faces away from the body.

4. Arrangement according to one of the claims 1 or 2, characterised in that in the upper region of the body, the at least one channel (3β) is arranged on the side of the first seal (2β) that faces the body, and in that the second seal (4β) is arranged on the side of the first seal (2β) and of the at least one channel (3β) that faces the body.

5. Arrangement according to one of the claims 1 or 3 or 4, characterised in that it is arranged substantially vertically at the side of the body.

6. Arrangement according to one of the claims 1 to 5, characterised in that the first seal (2) consists of individual segments (2a-c) which are connected to each other.

7. Arrangement according to one of the claims 5 or 6, characterised in that the channel (3) is fastened to the first seal (2) with holding loops (14).

8. Arrangement according to one of the claims 1 to 7, characterised in that the second seal (4) is three-layered, and in that the middle layer (12) consists of an absorbent material and the two other layers (11, 13) consist of an inert mineral material.

9. Arrangement according to one of the claims 1 to 8, characterised in that the second seal (4) has a material which is capable of swelling.

10. Arrangement according to one of the claims 1 to 9, characterised in that at least one fibre mat (4a - 4c) which is capable of swelling is arranged as a second seal (4).

11. Arrangement according to claim 10, characterised in that at least one channel (3) is fixed on each fibre mat (4a - 4c) in a manner such that it faces the first seal (2).

12. Arrangement according to one of the claims 1 to 11, characterised in that the second seal (4) is arranged so as to be inclined towards an adjacent channel (3).

13. Arrangement according to one of the claims 1 to 12, characterised in that the second seal (4) consists of bentonite or contains bentonite.

14. Arrangement according to one of the claims 1 to 13, characterised in that arranged between the two seals (2 and 4) is a permeable intermediate layer (5) which is allocated to the at least one channel (3).

15. Arrangement according to claim 14, characterised in that the permeable intermediate layer (5) consists of sand.

16. Arrangement according to one of the claims 1 to 15, characterised in that channels (3a-c) are arranged at different distances from the first seal (2).

17. Arrangement according to one of the claims 1 to 16, characterised in that in order to recognise a leak in the first seal (2), there is a lance (17), with which a tracer is to be brought into the vicinity of the first seal (2).

## Revendications

1. Dispositif pour l'étanchéification, des deux côtés, et la surveillance d'un corps, en particulier d'une décharge de déchets (1), comprenant un premier dispositif d'étanchéité (2) étanche au liquide et un deuxième dispositif d'étanchéité (4) en matériau minéral étanche, et comprenant un dispositif de surveillance pourvu, au moins, d'un canal (3) perméable à un produit à détecter, qui présente un orifice d'entrée (3A) et un orifice de sortie (3B) destinés à un fluide de transport et qui est relié, au niveau de l'orifice de sortie (3B), à un capteur (9) destiné au produit à détecter, caractérisé en ce que le dispositif pour l'étanchéification, des deux côtés, est prévu et dans la partie inférieure et dans la partie supérieure du corps, en ce que le canal (3), au moins, est encastré dans le deuxième dispositif d'étanchéité (4) ou disposé entre le premier (2) et le deuxième dispositif d'étanchéité (4) et en ce que le deuxième dispositif d'étanchéité (4), perpendiculairement à la surface d'étanchéité, présente une perméabilité moindre que dans le plan de la surface d'étanchéité, de manière à amener au canal (3) le produit à détecter.

2. Dispositif selon la revendication 1, caractérisé en ce qu'il est disposé essentiellement horizontalement.

3. Dispositif selon l'une des revendications 1 ou 2, caractérisé en ce que, dans la partie inférieure du corps, le premier dispositif d'étanchéité (2α) est disposé en regard du corps, en ce que le canal (3α), au moins, est disposé sur le côté opposé au corps du premier dispositif d'étanchéité (2α) et en ce que le deuxième dispositif d'étanchéité (4α) est disposé sur le côté opposé au corps du premier dispositif d'étanchéité (2α) et du canal (3α), au moins.

4. Dispositif selon l'une des revendications 1 ou 2, caractérisé en ce que, dans la partie supérieure du corps, le canal (3β), au moins, est disposé sur le côté en regard du corps du premier dispositif d'étanchéité (2β) et en ce que le deuxième dispositif d'étanchéité (4β) est disposé sur le côté en regard du corps du premier dispositif d'étanchéité (2β) et du canal (3β), au moins.

5. Dispositif selon l'une des revendications 1 ou 3 ou 4, caractérisé en ce que, latéralement par rapport au corps, il est disposé essentiellement verticalement.

**6.** Dispositif selon l'une des revendications 1 à 5, caractérisé en ce que le premier dispositif d'étanchéité (2) est composé de segments (2a - c) individuels reliés entre eux.

**7.** Dispositif selon l'une des revendications 5 ou 6, caractérisé en ce que le canal (3) est fixé au premier dispositif d'étanchéité (2) au moyen de boucles de maintien (14).

**8.** Dispositif selon l'une des revendications 1 à 7, caractérisé en ce que le deuxième dispositif d'étanchéité (4) est en trois couches et en ce que la couche centrale (12) est en matériau absorbant et les deux autres couches (11, 13) en matériau minéral inerte.

**9.** Dispositif selon l'une des revendications 1 à 8, caractérisé en ce que le deuxième dispositif d'étanchéité (4) présente un matériau capable de gonfler.

**10.** Dispositif selon l'une des revendications 1 à 9, caractérisé en ce que, au moins, un mat en fibres (4a - 4c) capable de gonfler, servant de deuxième dispositif d'étanchéité (4), est prévu.

**11.** Dispositif selon la revendication 10, caractérisé en ce que, au moins, un canal (3), en regard du premier dispositif d'étanchéité (2), est fixé à chaque fois sur l'un des mats en fibres (4a - 4c).

**12.** Dispositif selon l'une des revendications 1 à 11, caractérisé en ce que le deuxième dispositif d'étanchéité (4) est disposé de manière inclinée en direction d'un canal adjacent (3).

**13.** Dispositif selon l'une des revendications 1 à 12, caractérisé en ce que le deuxième dispositif d'étanchéité (4) est en bentonite ou contient de la bentonite.

**14.** Dispositif selon l'une des revendications 1 à 13, caractérisé en ce qu'une couche intermédiaire (5) perméable associée au canal (3), au moins, est disposée entre les deux dispositifs d'étanchéité (2 et 4).

**15.** Dispositif selon la revendication 14, caractérisé en ce que la couche intermédiaire (5) perméable est composée de sable.

**16.** Dispositif selon l'une des revendications 1 à 15, caractérisé en ce que des canaux (3a - c) sont disposés à distance variable du premier dispositif d'étanchéité (2).

**17.** Dispositif selon l'une des revendications 1 à 16, caractérisé en ce que, pour détecter une fuite dans le premier dispositif d'étanchéité (2), une lance (17) est prévue, qui est destinée à amener un traceur à proximité du premier dispositif d'étanchéité (2).

FIG 1

FIG 2

FIG 3

FIG 4

FIG 5

FIG 6

FIG 7

FIG 8

FIG 9

FIG 10

EP 0 624 782 B1